# EUROPEAN PATENT APPLICATION

(11) **EP 2 849 447 A1**
(43) Date of publication of application: **18.03.2015**
(21) Application number: 14184697.2
(22) Date of filing: 15.09.2014
(51) Int. Cl.: H04N 21/233, H04N 21/234, H04N 21/414, H04N 21/4784, H04N 21/422, H04N 21/4223, G06Q 30/02, G10L 25/54

(54) **Content recognition based evaluation system in a mobile environment**

(30) Priority: 16.09.2013 US 201314027966
(71) Applicant: Magix AG, 10117 Berlin (DE)
(72) Inventor: Herberger, Tilman, 01219 Dresden (DE); Tost, Titus, 01219 Dresden (DE)

(57) **Abstract**

According to a preferred aspect of the instant invention, there is provided a system for an evaluation system based on content recognition in a mobile environment. Content, preferably audio content is recorded by the instant invention. This content is identified and the identification information is transmitted to a remote server. This remote server transfer specific gratifications based on the received identification information to the mobile device, with a particular leveling system providing additional gratifications when a predetermined number or type of content has been recorded and identified.

## Description

This application is a continuation-in-part of co-pending U.S. Patent Application serial number 13/728,088 filed on 12/27/2012 and claims the benefit and incorporates said application by reference into this document as if fully set out at this point.

### FIELD OF THE INVENTION

The present invention relates generally to the field of content recognition and more particularly to a system providing marketing opportunities for sales departments by providing a dynamically variable evaluation system to a user in a mobile environment.

The audio content recognition described and utilized in this disclosure is described in greater detail in its associated patent application identified *supra.* The description of the audio recognition technology component of the instant invention will therefore be kept to a minimum herein.

Mobile devices such as smart phones and tablets are now used by almost everyone, especially in the younger demographic, which is a main target group for many marketing strategists. Such devices provide a multitude of different means of getting and staying in contact with others include, for example, e-mail, voice or video conferencing via the Internet, short messages, telephone conversations, etc., via cell phones. These sorts of devices are typically fully capable of displaying multimedia such as music or videos, which makes it possible for the same device to be both a productivity and entertainment tool.

Additionally almost all of these devices are designed to allow the user to extend their functionality through software and/or hardware. Examples of hardware accessories include external speakers, earphones and cables to allow for the connection to other mobile devices. These types of extensions are limited in their range by the connections provided by the mobile devices.

The range of enhancements provided by software is, of course, much broader than that provided by hardware and is limited only by the imagination and innovation of the software developers and the technical features of the mobile devices. In view of their mobility, connectivity, reachability, technical potential, and extensibility, mobile devices such as smart phones and tablets have seen an extraordinary rise in popularity in recent years. Thus, many computer-related functions that have traditionally been performed on a desktop computer now can potentially take place on a mobile device. As a specific example, software is available to scan a code on a movie poster that allows the user to be directly connected with an Internet ticket vendor (e.g., via a QR code). The wide distribution of these mobile devices thus opens the door to new marketing opportunities for companies to contact potential customers and to tie these customers to the company.

Thus what is needed in the world of mobile devices is a method of contacting potential customers that exploits the always on/ always reachable state of modern cell phones, etc., and that takes into account how potential customers may be reached in unconventional ways through such devices, and that provides the customers with new and innovative opportunities to interact with their favorite companies, in order and, in some instances, to receive incentives to do so.

Heretofore, as is well known in the media industry, there has been a need for an invention to address and solve the above-described problems. Accordingly it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein an evaluation system based on a content recognition technology that operates in a mobile environment.

In a preferred embodiment the instant invention will provide the user with an option to record and identify content, preferably audio content on a portable device. In an embodiment the user will be able to interact with a graphical user interface to define specifics of the recognition mode; however, in some embodiments the recognition will preferably be performed automatically. The functionality of the recognition mode is described in more detail in U.S. Provisional Patent Application serial number 61/582,011 and will therefore not be included in full here.

A preferred embodiment of the instant invention will incorporate audio content recognition as part of its full functionality. The instant system will be configured to enable a potential customer or user to record individual parts of audio content with a mobile device in, for example, instances where the audio content is freely available (e.g., at an outdoor concert). The recorded content will then be identified by the content recognition system and the result of the recognition will be provided to a server which based on the recognition result activates and transmits to the user one or more reward, such rewards being associated with the recognized audio content. The recognition based evaluation system of the instant invention provides individual rewards or incentives that are particularized to the identified audio content and, in some embodiments, features reward steps. That is, in this embodiment the audio content might be organized into content groups, where the audio content that makes up a content group features individual-song rewards and, additionally, one or more rewards for those instances where the user has managed to capture examples of all of the audio content group members.

The evaluation system can be incorporated as a constant, strictly server based system, wherein the rewards offered to a user will be stored permanently along with other user data. Alternatively the rewards can also be provided to the user dynamically without a permanent storage on a server machine. The evaluation system might provide the user, or potential customer with benefits that give the user special discounts in a shop-based environment or access to specific material in a software-based environment. The opportunities for use of the evaluation system and the possibilities to tie customers to the provider of content utilizing the evaluation system are endless and only bound by the imagination.

The foregoing has outlined in broad terms the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention.

### BRIEF DESCRIPTION OF THE DRAWINGS

Other objects and advantages of the invention will become apparent upon reading the following detailed description and upon reference to the drawings in which:
Figure 1 is an abstract depiction of the general working environment of the instant invention.
Figure 2 depicts a more detailed setup of the general working environment of the instant invention.
Figure 3 illustrates an overview of the data layout on the server side of the instant invention.
Figure 4 shows a potential approach for the database architecture of the instant invention.
Figure 5 shows another potential approach for the database architecture of the instant invention.
Figure 6 illustrates a third approach for the database architecture of the instant invention.
Figure 7 depicts an optimized database architecture approach of the instant invention.
Figure 8 illustrates the general data setup on the mobile device part and the server part of the instant invention.
Figure 9 depicts the workflow of the instant invention on both the mobile device and on the server.
Figure 10 illustrates the steps that are carried out in the server part of the instant invention.
Figure 11 depicts a detailed illustration of the steps carried out by the instant invention on the server.
Figure 12 shows a more detailed order of the steps of the instant invention on the server.
Figure 13 illustrates the complete environment of the instant invention showing the data contents of the individual parts of the instant invention.

### DESCRIPTION OF THE PREFERRED EMBODIMENTS

Referring now to the drawings, wherein like reference numerals indicate the same parts throughout the several views, there is provided a preferred evaluation system in a mobile environment that is based on content recognition technology.

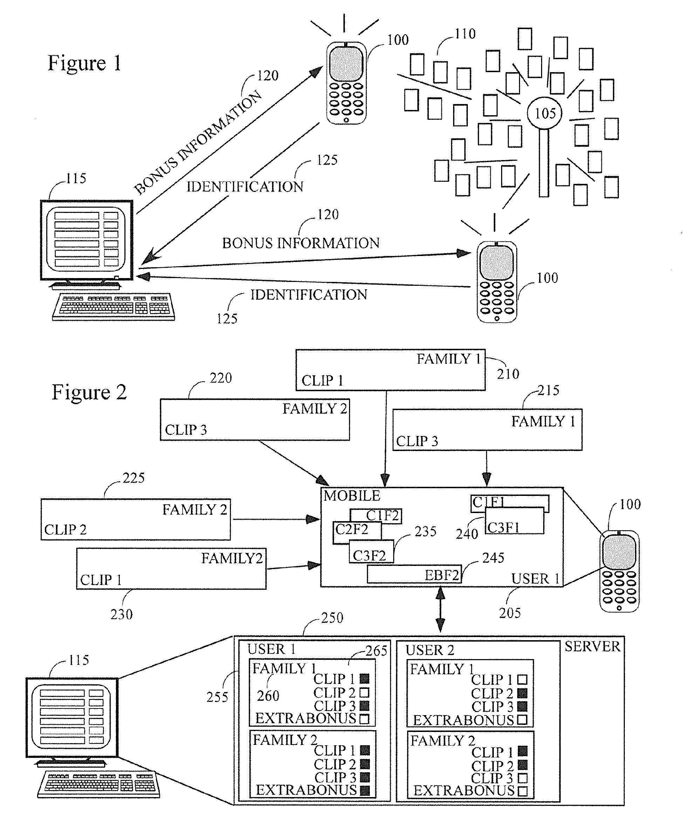

As is generally indicated in Figure **1****,** in an embodiment the instant invention incorporates three main components. The first component is a mobile device **100;** this mobile device might be any mobile device with the capability of recording audio material and running software on it. Such a mobile, portable device will have some amount of program memory as is conventionally utilized by such units. This mobile device will be able and used to record and store audio content **110** that is being broadcasted from a broadcast station **105.** This broadcast station might be any device that is capable of providing audio content over the air. For example, in some embodiments a business owner will broadcast audio content to customers via an in-store audio system, a table top radio, or via a portable music device that contains its own audio content. The audio content might comprise of any number of different forms, including complete audio tracks, music, announcements, commercials or a mixture of all of these. In a preferred embodiment the audio broadcast station will be in a form that can be captured by the user of mobile, portable device. The captured clips will then be identified on the user's device and the identification data **125** will be transmitted to a remote server **115.** As such, the remote server is a key component of the functionality of the instant invention.

The identification data transmitted from the mobile device will be checked against the database stored in the remote server and, if a match is found, the remote server will send the bonus information **120** to the mobile device. The bonus information might take on a variety of different forms; some possible forms will be discussed below. After receiving the bonus information from the remote server, the user will be able to redeem the bonus in the venue for which the bonus has been advertised, preferably the store in which the user recorded the audio content. However, this is just one example of how the bonus information might be utilized by the user. For example, the user might hold off redeeming the bonus, in order to redeem it later or combine it with another bonus.

Turning next to Figure **2****,** this figure contains a more detailed description of the components of an embodiment of the instant invention. This illustration provides an example of the sorts of data that might be found on a user's mobile device **100.** As is indicated, a number of different audio clips might be available for the user to record on the mobile device. The audio material associated with these clips will preferably previously have been hierarchically organized within the server **115,** with similar clips comprising a clip family. The organization of the clips into families might be implemented by the provider of the audio clips.

In the example of Figure **2** the user will previously have been presented with clips **1 230, 2 225** and 3 **220** from clip family 2 and clip **1 210** and clip 3 **215** from family 1 and each of these clips will have been recorded and stored by the user of mobile device **100.**

The user will preferably be able to retrieve a display **205** of the status of the stored audio clips on the mobile device. In this status display the recorded and stored audio clips are sorted according to the specific family these clips are belonging to, wherein in this example the storage of clips 1 through 3 of family 2 and the storage of clip 1 and clip 3 of family 1 are acknowledged and displayed to the user. Additionally the user will be informed concerning the status of the extra bonus **245** associated with each clip family.

The mobile device will preferably either be in constant communication with the remote server **115** (or at least be able to communicate with it as needed) or the connection will be initiated via the pull principle. That is, each time data is transmitted either from the server to the mobile device or from the mobile device to the server, a connection will be created and the necessary data transmitted. The data storage configuration **250** on the remote server will preferably be segregated according to individual users **255,** wherein for each user the determined clip families will be displayed along with their associated clips **260.** Additionally, and preferably, for each clip that the user has recorded and identified a marker will be set in the database on the remote server. Still further, the remote server will preferably automatically set a flag for each individual user in each family for the activation and transmission of the additional bonus to the user if all the clips in the family have been recorded and identified / collected by the user.

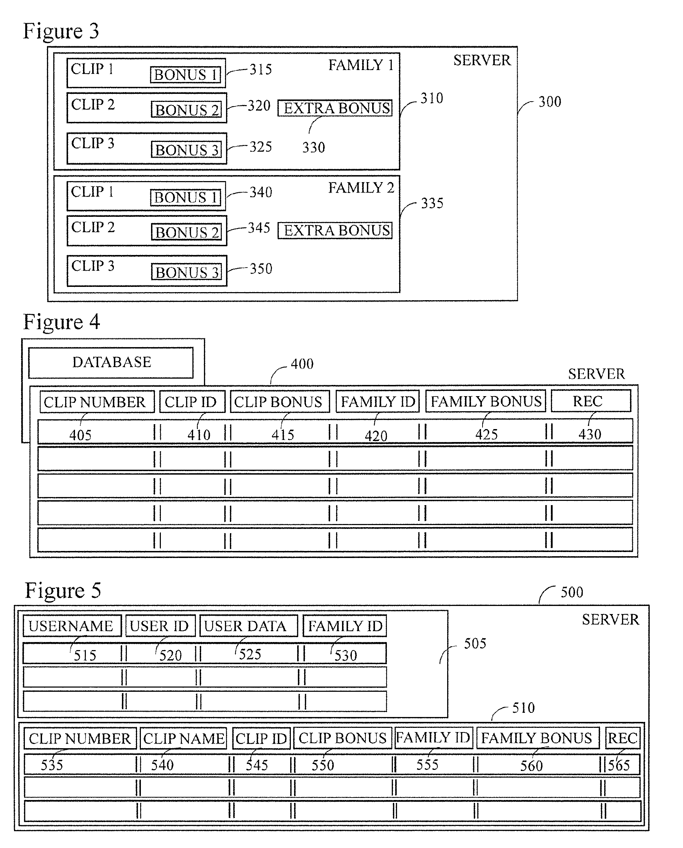

Now turning to Figure **3****,** this figure illustrates a preferred database architecture and database structure **300** on the remote server in more detail. The organization will preferably be based on the individual clip families or bonus families that are provided to the user, meaning that the data will be organized according to the families. Additionally, and as is indicated in Figure **3****,** the preferred approach will utilize a dynamic data approach, i.e., the database will not store any particular data about the individual users but instead create a temporary identification for a user for use during a single session.

In an embodiment, the remote server will store the individual families **310.** The server will also store the clips that belong to that particular family. In some embodiments, the actual clips will not be stored on the remote server. Instead, what will preferably be stored is the identification data, i.e., the fingerprint that defines the clips and allows them to be identified. The data will preferably be calculated or otherwise obtained and stored for all the clips that are associated with the family. In the example of Figure 3, identifying information for clip **1 315,** clip 2 **320** and clip 3 **325** is stored for this family of 3 clips. It is, however, also possible that a family might be made up of an arbitrary number of clips. The number of the clips in this figure is only shown for illustrative purposes here and is not meant to limit the instant invention in any way. Associated with each individual clip and also stored in the database is a corresponding bonus value.

Note that in some embodiments, there might be only be a few signatures transmitted to and stored on the cell phone or other portable computing device. For example, a business might offer an in-store promotion that would require the customer to seek out and record audio material (e.g., a music clip, a spoken ad, a sound effect, etc.) that is being broadcast from speakers that have been positioned in several different locations in the store. In some embodiments, each speaker will broadcast a different single audio or other clip. In other cases, all of the speakers might be broadcasting the same audio material but the audio content might change at different times of the day, days of the week, etc., thereby encouraging the customer to revisit the store at different times. In other instances, for example in a mall, each store will broadcast its own unique audio material which would encourage customers to visit every store in the mall in order to obtain rewards and/or bonus rewards. In cases such as the foregoing, only the signatures for the audio material in this single store might be transmitted. Those of ordinary skill in the art will readily understand how such audio signatures might be developed, stored, and deployed.

According to the instant invention each recorded clip that has been identified successfully by the user provides a bonus or reward. In some embodiments, this could be an immediate discount in a shop, or other reward for the user. These rewards will preferably be stored in the remote server along with the associated clip families. In one preferred embodiment each clip will have a specific reward associated therewith. However, it might also be possible that each clip family has an associated number of different rewards that are provided to the user randomly.

Figure **3** displays the embodiment wherein each clip is associated with a specific bonus. In the event that the user has collected and successfully identified all clips that make up the family, in an embodiment the server will activate the extra bonus **330** that is associated with the clip family and stored therewith. Information associated with the extra bonus will then be transferred to the user. This extra bonus might take the form of additional discounts for the user, or free items for the user. Of course, the actual form that the bonus and/or extra bonus might take is not critical. Those of ordinary skill in the art can readily devise bonuses and extra bonuses that would be suitable for use with the instant invention..

Coming next to Figure **4****,** this figure shows in more detail an example of a technical scheme of the database that might be used in the remote server. A user of the instant invention preferably will not have any direct interaction with this component of the instant invention. However, in order to understand the operations of the invention taught herein, it will be necessary to consider an embodiment of the inner workings of server component.

Figure **4** depicts one possible configuration of a database **400** suitable for use with the instant invention. This embodiment stores in the database the clip number **405,** the clip ID **410,** the clip bonus **415,** the family ID **420,** the family bonus and a rec information **430.** The clip number section **405** will, in some embodiments, be a sequential record number or other code. The clip ID **410** will be the principal way of identifying the clips within the database. After successful identification the user will transmit the clip ID **410** to the server. Given the clip ID, the server will identify the reward(s) that have been earned by the user. The clip bonus section **415** contains information about the rewards that are associated with each clip. The family ID **420** contains information about family association of each clip. The family bonus section **425** contains information about the form of the family reward associated with a particular family.

This family reward will be activated and transmitted to the user after the user has recorded every clip of a particular family and sent the identification information for each clip to the remote server. Furthermore the "rec" parameter field **430** represents a flag that can be set for each clip after receipt of its identifying information. This is one possible way that the server will be able to keep track of the already identified clips. This embodiment represents a dynamic variant of the instant invention, wherein no particular data about the user is being stored. However, to keep track of the progress of the user toward qualifying for a family reward, the instant invention will preferably generate a database of the type displayed in Figure 4 for each user at run time. Finally, the instant invention will preferably additionally allow the user to initiate a more permanent form of storing the clip and user information.

Note that it is quite possible that the recorded audio information might not match any known signature. In such a case, in some embodiments the user will be informed of the lack of a match and encouraged to search further. Additionally, it may be useful in some cases to record the fact that a user has previously redeemed a given reward as a means of preventing a user to collecting the same bonus multiple times. Of course, in some embodiments this might be acceptable or even desired.

Turning next to Figure **5****,** this figure illustrates a preferred form **500** of the above mentioned more permanent approach of storing the user and clip information. In this embodiment, the database will store two tables. In one table **505** the pertinent user data will be stored. For example, information such as the user name **515,** a user ID **520,** user data **525** and the family ID **530,** etc., might be stored here. The user name might be an alias or the real name of the user. The user ID field will typically be a combination of letters and/or numbers that is associated with a user name. In some embodiments, this information will be collected the first time a user initiates the instant invention on his or her mobile device. In an embodiment, this user ID might also be associated with the user's particular mobile device (e.g., a cell phone number, serial number, etc.).

The family ID, as has been described previously, will preferably contain information about the clips that are associated therewith. In this embodiment, the family ID will also be the key to accessing the second table in the database. That is, in an embodiment this table and its contents are comparable to the table described in connection with Figure **4****.** This table will contain information about the clip number **535,** the clip name **540,** the clip ID **545,** the clip bonus **550,** the family ID **555,** the family bonus **560** and the rec information **565.** The clip number **535** will represent a number that can be used for sorting and arranging the individual clips.

The clip name **540** field will in some embodiments contain the name of the clips that have been recorded by the user. Preferably, the remote server will have stored the clip, so the clip name is used primarily as a means to increase the probability that the clip will be identified correctly in the data. The user who records the audio material may not generally know the actual clip names which could possibly be arbitrarily specified by the broadcaster and could be a serial number, etc. The identification of the recorded clip in the mobile device will preferably be carried out by checking the audio against the internal recognition database using a generated fingerprint. After identification, in an embodiment, the result will be communicated to the remote server. The identification will preferably be via the clip ID, which will then be checked against the second table and the clip ID **545** section of the database in the remote server.

In some embodiments, the second / server-side table will contain information about the individual reward **550** associated with the correctly identified clip. Furthermore the server-side table will preferably contain the family ID **555** information for the identified clip. Additionally associated with the family ID will be a family bonus section **560,** wherein the instant invention stores the information about the family reward in that section.

In the last section of the second table in the example of Figure **5****,** i.e., the rec section **565,** the instant invention will store the notice that a particular clip has been recorded and identified. Both tables will be linked by the family ID as a key. Since both sections in both tables contain the same content, the two can be linked together and the instant invention will readily be able to determine which user has completed which family. Additionally in some embodiments it might also be possible to insert information about the clip ID into the user-side table. In a preferred embodiment the clip ID information will be stored at running time of the system and the first table will only store the information about the collected clip families, by storing the family ID.

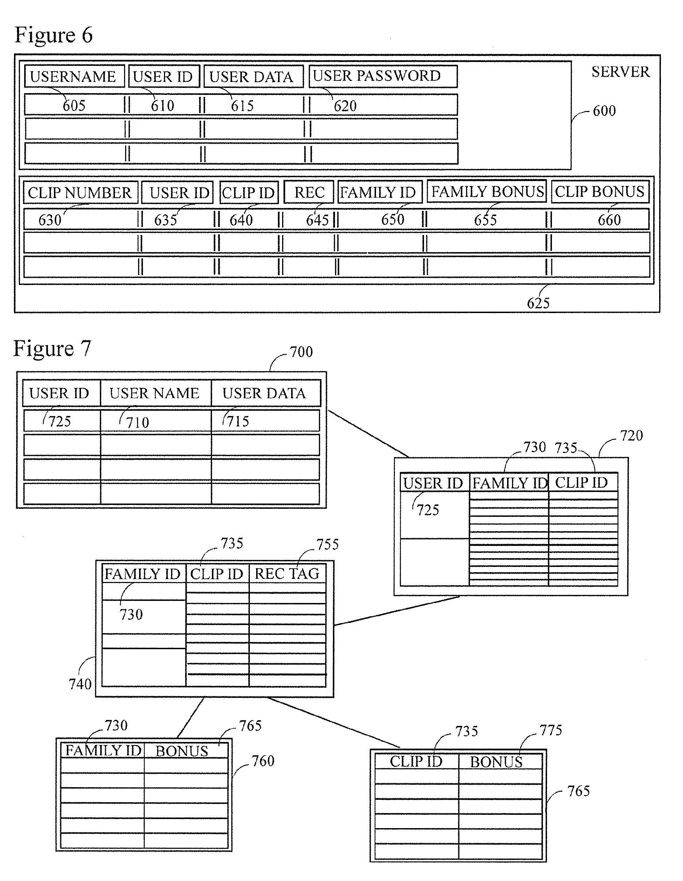

Coming next to Figure **6****,** this figure illustrates a third preferred approach regarding the database architecture in the instant invention - an approach that provides a more permanent approach to storing the data. In this variation the server also stores two tables in the database. The first table **600** will store user specific data including, for example, the user name **605.** The username might be an alias or the real name of the user. Furthermore the table will contain a unique user ID **610.** This user ID might be selected either by the user or provided automatically during a registration phase. The table will also contain user data **615** such as address, age and birthday, etc. The table will also contain a user password **620** which will be selected by the user at registration and which will be stored in an encrypted form in the database. This approach also includes at least a second table **625** which will contain a clip number **630** for sorting and arranging the individual clips, a user ID **635** to create a connection between the two tables, to allow the instant invention to quickly determine which user has which clips collected and which gratification has been sent to which user.

In an embodiment, the instant invention will keep track of whether a particular clip has been recorded and identified in the rec section **645** of the second table. The clip ID **640** and clip bonus **660** sections of the second table will contain information that helps the instant invention define which clips have been identified and what type of reward is associated with it. The family ID **650** and family bonus **665** sections contain information about each family and the extra bonus (if any) associated with a completed collection of family clips. In this embodiment, both tables are linked to each other via the user ID as key, wherein each identified clip is stored in the appropriate table as it is identified on the user's device.

Turning next to Figure **7,** Figure **7** depicts another suitable architecture of the database and the individual database tables that could be used in a preferred embodiment. The main table used in this approach is the table **720** that contains the IDs. As can be seen from the example of Figure **7****,** this table contains the user ID **725,** the family ID **730** and the clip ID **735.** The user ID uniquely identifies each user. The user ID might be the user's choice of name, screen name, etc., or it could be a random combination of numbers and letters that are provided to the user by the instant invention. In any case, the user's ID will preferably be stored in the database of the remote server and also on the mobile device to allow the user to quickly reconnect to the remote server and to be able to review previously identified audio works, the rewards associated therewith, and the progress toward completing a family. A family ID **730** will preferably be assigned to each individual clip in the database. In some instances, the family size might a single entry but in other instances the family size could be arbitrarily large. The clip ID **735** will be, for example, an arbitrary combination of numbers that uniquely identify it within the database.

The audio clips will be identifiable through the use of the clip ID and such an ID will preferably be transmitted from the mobile device to the remote server and checked with the clip ID database to determine which specific bonus or bonuses are available. The ID table **720** will preferably be relatable to at least two additional database tables. A first of such databases is a user based table **700** which, will contain the user ID **720,** the user name **710** (e.g., real name or alias) and other user data 715. In some embodiments, the user data might comprise address, age and specific preferences in music, shopping, etc. The second table will preferably be a table that contains at least the family ID 730, the clip ID 735 and the rec tag 755. In this embodiment, the rec tag will indicate whether or not a particular clip has been successfully identified by the user's mobile device.

Additionally, by associating the family ID and the clip ID the instant invention will also be able to determine the members of each clip family and when a user was successful in collecting all clips of a specific clip family.

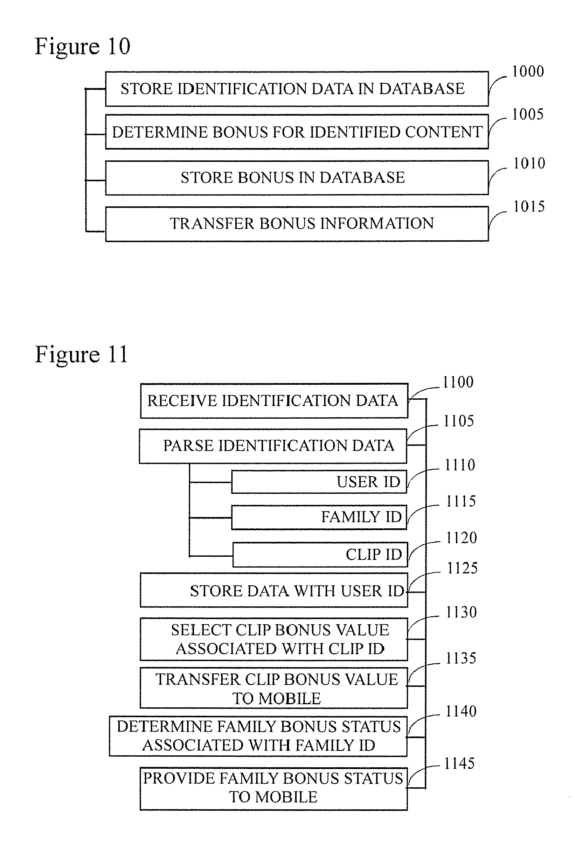

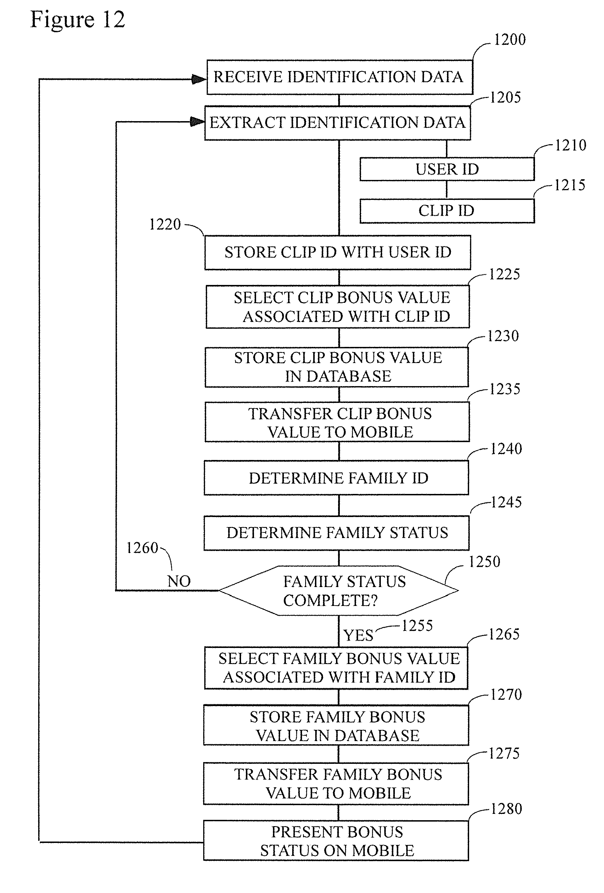

The above mentioned database table will preferably be linked or otherwise associated with two other database tables. As an example, a first preferred database table 760 that contains the family ID 730 and the information about the bonus 765 associated with a particular family ID will be so-linked. The second database table 765 will contain, for example, the clip ID 735 and the information about the bonus 775 associated with a particular clip ID. To further understand the inner workings of this arrangement of different database tables the process shall be described more extensively in connection with Figures 11 and 12, which illustrate various features of the instant invention only for purposes of helping the reader understand a preferred embodiment and not out of any intent to limit the instant invention to the variations presented.

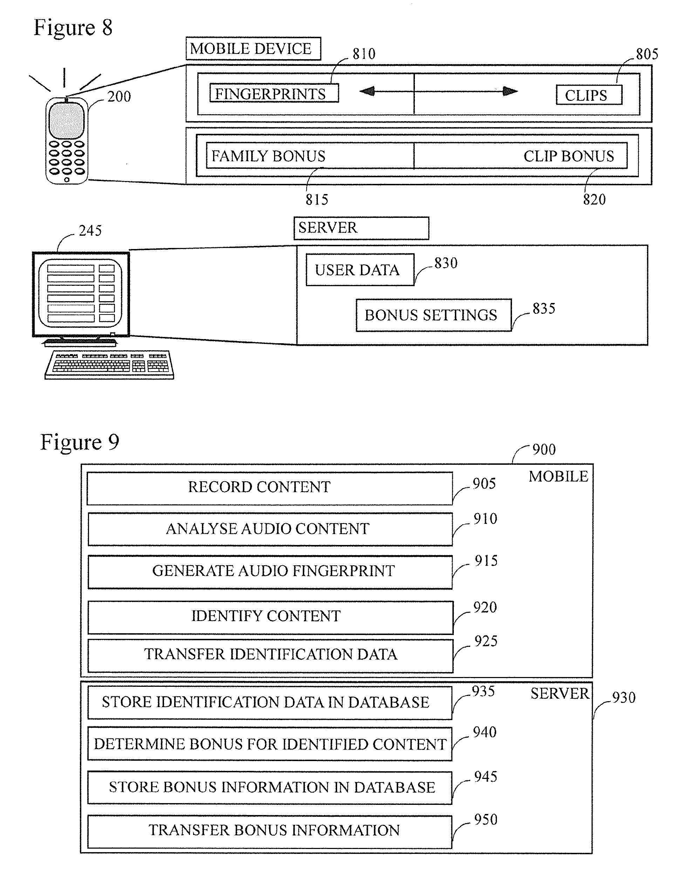

Coming next to Figure 8, this figure illustrates the data content on the devices that are a part of an embodiment of the instant invention. On the mobile device 200, the recorded clips 805 will preferably be matched against a database of fingerprints 810, which will provide a means of identifying the audio work that can then be transmitted to the remote server. Based on the identification data transmitted from the mobile device, the remote server 245 will transmit back to the originating device either the clip bonus information 820 and/or the family bonus information **815** (if an audio clip family has been identified and collected by the user). Additionally the remote server **245** stores user data **830** and, as has been previously described, at least two different approaches to storing and using user data are preferred.

In a first approach the user data will be used dynamically and not stored on the remote server. The user will be assigned user identification, preferably a user ID and this is used during run time for identification between the mobile device and the remote server, wherein the identification of clips is carried out at runtime and the awards are also only provided at runtime. In the second approach, all of the items the user has identified and all of the user's awards will be stored in a database and will thus be available and usable at a later time. The amount of user data that is stored on the server will clearly depend on which approach is adopted. Thus, in the example of the first approach the user data will primarily consist of of identification data and a dynamic user ID, whereas in the second approach the user data might additionally contain user specific data, like address, birthday etc. In addition to the user data **830,** the remote server will also preferably store information about the bonus, the awards **835,** etc. This information will be associated with the clip identification that is sent from the mobile device and provides the bonus information in a one to one relationship. A positive identification will trigger transmission of the associated bonus information, and award to the mobile device, furthermore the bonus settings **835** contain information about the audio clip families and the associated bonus values with these clip families.

Turning next to Figure **9****,** this figure depicts an example workflow of the instant invention which has been separated, for purposes of illustration, into the workflow on the mobile device and the workflow on the server. In this embodiment, on the mobile device **900** the process will preferably begin by recording ambient content **905,** which is preferably audio content, however it is certainly also possible that the user will additionally record video material in instances where, for example, the audio is sourced from a TV or other audio / video source. More generally, among the sorts of media clips that might be suitable for use with the instant invention are audio clips, video clips with audio, and video clips without audio. That being said, no matter what sort of media clip is utilized it is important that the mobile computing device record some portion of it from the broadcast and identify the media clip that has been so broadcast. Of course, if the user records some part of a video broadcast it is anticipated that a video recording device of some sort will be utilized, which recorders are commonplace in mobile devices such as cell phones.

In the next preferred step the instant invention will analyze the recorded audio content 910 and will afterwards generate an audio fingerprint **915,** which will then be used to identify the content **920** on the mobile device. The process from steps **905** to **920** has been described in parent U.S. Provisional Patent Application serial number 651,582,011 in more detail which is fully incorporated herein. As a next preferred step, the mobile device will transfer the identification data to the remote server **925.** On the remote server **930,** the remote server will receive the identification data and, as a preferred first step, store it in the database **935.** As has been explained previously, the information can be stored permanently or only during the term of the current user's session.

In the next preferred step the instant invention will determine the bonus, award associated with the identified content **940.** Next, and preferably, the instant invention will store the bonus information **945** in the database, i.e., the information relating to the previously identified audio content as it relates to the family hierarchy will be stored. As a next preferred step the remote server will transfer the bonus information that has been determined and/or the appropriate award data (if any) to the mobile device.

Coming next to Figure **10****,** this figure contains a high level depiction of some steps that could be carried out on the remote server of the instant invention. In a first preferred step the remote server will store the received identification data in the database **1000.** Then the received identification data will be compared with the content of the database of the instant invention in order to determine if a bonus is associated with the identified content **1005.** The result of this comparison step will then be stored in the database and will preferably include information that identifies the user **1010.** In the next preferred step the remote server will transmit the determined bonus information back to the mobile device.

Turning next to Figure **11****,** this figure contains a more detailed listing of the preferred steps carried out by the remote server of the instant invention. In a first preferred step the remote server will receive the identification data **1100** from the mobile device of the user. In the next preferred step the identification data will be parsed **1105,** thereby making it possible to utilize the multiple data values that are transmitted from the remote server. In this embodiment, the identification data will contain the user ID **1100,** the family ID **1115** and the clip ID **1120.** The user ID **1100** will either be a permanently assigned user identification or it may be generated and provided to the user dynamically at runtime. The clip ID **1120** uniquely identifies the recorded content and the family ID **1115** associates the clip with a particular family.

In a next preferred step the instant invention will store the parsed identification data, including the clip ID and the family and the user ID **1125.** The data will be stored into the associated database at the remote server. In the next preferred step the instant invention will select the bonus value that is associated with the clip ID **1130** and will transfer the bonus value associated with the clip back to the mobile device **1135.** In a next preferred step the instant invention will determine the status of the family bonus associated with the transmitted family ID **1140** and will afterwards transmit the family bonus status to the mobile device **1145.** This transmission might consist only of the notice that the user is missing one ore more of a couple of audio clips for a completion of a particular audio clip family, however it might also comprise of the transmission of the family bonus to the mobile device.

Coming next to Figure **12****,** this figure depicts a more detailed description of a preferred workflow of the instant invention on the remote server. As a first preferred step the remote server will receive the identification data from the mobile device **1200.** This identification data will be determined by comparing the fingerprint that has been calculated or otherwise obtained from a recorded audio clip with a database of fingerprints stored on the mobile device. In a next preferred step the remote server will parse the received identification data, which preferably has been transmitted in compressed form. The user ID **1210** and the clip ID **1215** will be extracted and in the next preferred step the remote server will select a user associated database table or entry and will store the clip ID in that database with the clip ID **1220.** In this embodiment the clip ID will be stored with the user ID in one database table. That being said, those of ordinary skill in the art will recognize that other approaches to working with the database are possible. In the next preferred step the instant invention will select the clip bonus value that is associated with the determined and stored clip ID **1225.** In this case, the clip bonus value, or at least the information that the clip bonus value has been triggered, will be stored in the database **1230.**

In a next preferred step the instant invention will transfer the clip bonus value to the mobile device **1235.** At that point, it will be up to the user to decide what to do with the transmitted bonus value. Of course, in some cases notice that a bonus or other award has been earned will additionally be sent to the entity that is sponsoring the audio broadcast and/or redeeming the award(s). In some cases information sufficient to identify the user will be transmitted. In other cases, only a notice that an award has been earned will be sent. Finally, in some cases no such communication will be made.

In a next preferred step on the remote server, the instant invention will determine the family ID that is associated with the identified clip ID **1240** and in the next preferred step the instant invention will determine the family status **1250** and any bonus associated with a completed family, if any. If the family status indicates the user has not completed the family **1260,** the process will preferably branch back to the beginning, i.e., to the point where the identification data is received. If the family status indicates the user has completed a family **1255,** the instant invention will next preferably identify the family bonus value that is associated with the family ID **1265** and will store a notice in the database that indicates the status of the family bonus **1270.** In the next preferred step, the instant invention will transfer an indicium of the family bonus value to the mobile device **1275** so that the bonus states can be presented to the user **1280.**

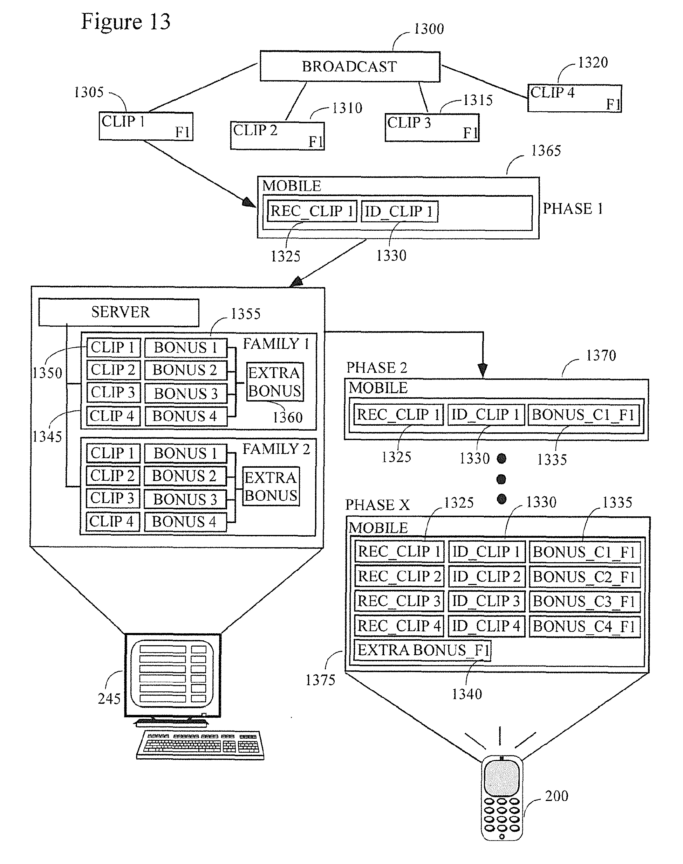

Turning next to Figure **13****,** this figure illustrates the environment of the instant invention and shows an example of the sorts of data that might be generated at different points. In this example, a broadcast point **1300** provides a plurality of individual audio clips where, in this example, the clips belong to a single clip family. Clip 1 **1305** for example belongs to clip family 1, Clip 2 **1310** belongs to clip family 1, clip 3 **1315** belongs to family 1 and Clip 4 **1320** also belongs to family 1. Other components in the environment are the remote server **245** and the mobile device **200.** Preferably, the remote server **245** and the mobile device **200** will be in regular (or even continuous) contact with each other. In a first phase **1365** of the instant invention, the user of the mobile device records at least a part of the broadcast of Clip 1 from family 1. In some instances, the user might be able to record the entire clip in its complete length but that is not essential as it will usually be sufficient to only record a small part of the broadcasted clip. That being said, in some instances the broadcasting entity might want to require that the user record the entirety of the clip where, for example, an ad was being broadcast.

The recorded clip **1325** will be stored at least temporarily in the mobile device and then compared with the signatures in the local database. Information that is representative of the identified data will then be transferred to the remote server **245,** where the identity of the clip will be combined with information about the associated family to determine whether an award / bonus is merited. Note that, in this embodiment, the server will not need to store the audio clips themselves nor it is necessary to transmit these audio clips to the user's device. Instead, in this embodiment, the server will only contain information describing and identifying the audio clips (i.e., the signatures of the clips). Associated with each clip will be a clip bonus **1355,** a value representative of which will be transmitted back to the user. As has been discussed previously, associated with each family may be a family bonus **1360** that is activated once the user has recorded and collected all the individual clips belonging to the clip family. If so, that information will be transmitted back to the user as well and/or to the entity that sponsored, hosted, etc., the audio broadcast.

Information representative of the bonus will then be transferred back to the user' mobile device and, in the next phase **1370,** this information will be at least temporarily stored within the mobile device **1335.** By recording more and more audio clips and sending the identification information to the remote server, the user will be able to complete one or more families and family collection particular families, wherein in phase **X1375** of Figure **13** such a complete family status is illustrated. In this example, the user of the mobile device has recorded and identified all of the audio clips that belong to clip family 1. The bonus values for the recorded audio clips have been transmitted to the mobile device and, since family 1 is complete, the remote server **245** has also transmitted the extra bonus associated with family 1 to the mobile device where it can be stored **1340** for future use by the user.

Note that, for purposes of the instant application, the term "remote server" will be used to refer to a single computer, two or more computers that are connected via a network, etc.

### CONCLUSIONS

Of course, many modifications and extensions could be made to the instant invention by those of ordinary skill in the art. For example in one preferred embodiment the instant invention on the mobile device will regularly connect to another remote server to receive new relevant fingerprints for identification of audio clips. In another preferred embodiment the instant invention could be implemented as a completely dynamic version, wherein the mobile device would never transmit any user identification, this embodiment would only transmit the clip identifications and the remote server would transmit the bonus information to the mobile device leaving the mobile device with the task to sort through the received bonus information displaying only the new and previously unknown bonus data to the user.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of providing a reward to a user carrying a mobile computing device, wherein is provided at least one media clip, comprising the steps of:
(a) selecting one of said at least one media clip;
(b) performing a perceptible broadcast of said selected media clip;
(c) receiving within said mobile computing device at least a portion of said perceptible broadcast of said selected media clip;
(d) identifying within said mobile computing device said selected media clip using at least a portion of said received portion of said perceptible broadcast;
(e) transmitting from within said mobile computing device to a remote server an indicium representative of said selected media clip;
(f) within said remote server, determining the reward associated with said selected media clip;
(g) transmitting a quantity representative of the reward to said mobile computing device; and,
(h) displaying on said mobile computing device a message to indicate the reward was received.

2. A method of providing a reward to a user carrying a mobile computing device according to Claim **1,** comprising the further step of:
(i) permitting the user to redeem the reward.

3. A method of providing a reward to a user carrying a mobile computing device according to Claim **1,** wherein said media clip is selected from the group consisting of an audio clip, a video clip with audio, and a video clip without audio.

4. A method of providing a reward to a user carrying a mobile computing device, wherein is provided a plurality of audio clips, comprising the steps of:
(a) selecting one of said at least one audio clip;
(b) performing an audible broadcast of said selected audio clip;
(c) receiving within said mobile computing device at least a portion of said audible broadcast of said selected audio clip;
(d) identifying within said mobile computing device said selected audio clip using at least a portion of said received portion of said audible broadcast;
(e) transmitting from within said mobile computing device to a remote server an indicium representative of said selected audio clip;
(f) within said remote server, determining the reward associated with said selected audio clip;
(g) transmitting a quantity representative of said determined reward to said mobile computing device;
(h) displaying on said mobile computing device a message to indicate said reward was received;
(i) performing steps (a) through (h) until each of said plurality of audio clips has been identified;
(j) transmitting to the mobile computing device an indication that each of said plurality of audio clips has been identified; and,
(k) displaying on said mobile device an indication of a bonus reward associated with said identification of each of said plurality of audio clips.

5. A method of providing a reward to a user carrying a mobile computing device according to Claim **4,** comprising the further step of:
(1) allowing the user to utilize said bonus reward.

6. A method of providing a reward to a user carrying a mobile computing device, wherein is provided a plurality of audio clips, and,
wherein said plurality of audio clips form a family of audio clips, comprising the steps of:
(a) selecting one of said plurality of audio clips;
(b) creating an audible broadcast of said selected audio clip;
(c) receiving within said mobile computing device at least a portion of said audible broadcast of said selected audio clip;
(d) identifying within said mobile computing device said received at least a portion of said selected audio clip;
(e) transmitting from within said mobile computing device to a remote server an indicium representative of said selected audio clip;
(f) within said remote server, determining a reward associated with said selected audio clip;
(g) transmitting a quantity representative of said reward to said mobile computing device;
(h) displaying on said mobile computing device a message to indicate said reward was received;
(i) continuing to perform at least steps (a) - (h) until each of said audio clips in said family has been selected;
(j) upon a determination that each of said audio clips in said family has been selected, determining a bonus reward;
(k) transmitting a quantity representative of said bonus reward to the mobile computing device;
(l) displaying on said mobile computing device a message to indicate receipt of said bonus reward; and,
(m) permitting the user to redeem said bonus reward.

7. A method of providing a reward to a user carrying a mobile computing device, wherein is provided at least one media clip and wherein the user has a mobile computing device, comprising the steps of:
(a) determining a signature for each of said at least one media clip, thereby producing a plurality of signatures;
(b) transmitting from a remote server to said mobile computing device said plurality of signatures;
(c) selecting one of said at least one media clip;
(d) performing a perceptible broadcast of said selected media clip;
(e) receiving within said mobile computing device at least a portion of said perceptible broadcast of said selected media clip;
(f) within said mobile computing device, using at least one of said plurality of signatures and said received portion of said perceptible broadcast to identify said selected media clip;
(g) transmitting from within said mobile computing device to a remote server an indicium representative of said selected media clip;
(h) within said remote server, determining the reward associated with said selected media clip;
(i) transmitting a quantity representative of the reward to said mobile computing device; and,
(j) displaying on said mobile computing device a message to indicate the reward was received.

8. A method of providing a reward to a user carrying a mobile computing device according to Claim 7, comprising the further step of:
(k) permitting the user to redeem the reward.

9. A method of providing a reward to a user carrying a mobile computing device according to Claim 7, wherein said media clip is selected from the group consisting of an audio clip, a video clip with audio, and a video clip without audio.
